# EUROPÄISCHE PATENTANMELDUNG

(11) **EP 4 818 563 A1**
(43) Veröffentlichungstag der Anmeldung: **07.10.2026**
(21) Anmeldenummer: 25168084.9
(22) Anmeldetag: 02.04.2025
(51) Int. Cl.: F16L 3/10, F16L 55/035, H02G 3/32

(54) **VORRICHTUNG ZUR BEFESTIGUNG VON KABELN, ROHREN ODER SCHLÄUCHEN**

(71) Anmelder: WALTER STAUFFENBERG GMBH & CO. KG, 58791 Werdohl (DE)
(72) Erfinder: Schulz, Matthäus, 57439 Attendorn (DE)
(74) Vertreter: Patentanwälte Dörner & Kötter PartG mbB

(57) **Zusammenfassung**

Die Erfindung betrifft eine Vorrichtung zur Befestigung von Kabeln, Rohren oder Schläuchen, umfassend zwei miteinander verbindbare Schellenteile (2), welche im montierten Zustand eine Durchführung mit einem elliptischen, insbesondere kreisförmigen Querschnitt bilden, wobei die beiden Schellenteile (2) beidseitig der Durchführung Anschlagflächen (24) aufweisen, die im montierten Zustand aneinander anliegen und wobei wenigstens eine Anschlagfläche (24) eines ersten Schellenteils (2) ein erstes Rastelement aufweist und wenigstens eine Anschlagfläche (24) des anderen Schellenteils (2) ein zweites Rastelement aufweist, das im montierten Zustand mit einem ersten Rastelement des ersten Schellenteils (2) verrastet ist.

## Beschreibung

Die Erfindung betrifft eine Vorrichtung zur Befestigung von Kabeln, Rohren oder Schläuchen nach dem Oberbegriff des Patentanspruchs 1.

Zur Befestigung von Kabeln und Schläuchen werden so genannte Schellen eingesetzt, die regelmäßig einen Schellenkörper umfassen, der aus einem thermoplastischen oder elastomeren Kunststoff oder auch aus Metall hergestellt ist. Der Schellenkörper ist dabei häufig aus zwei miteinander verbindbaren Befestigungsteilen gebildet, die in montiertem Zustand eine Durchführung zur Aufnahme des Rohres beziehungsweise des Schlauches bilden. Derartige Schellen sind in Deutschland gemäß DIN 3015:1999-01 genormt. Zur Reduzierung von Vibrationen, die von dem aufgenommenen Rohr oder Schlauch auf den Schellenkörper übertragen werden, ist es bekannt, in der Durchführung des Schellenkörpers einen ringförmigen Gummieinsatz zur Aufnahme des Rohres beziehungsweise des Schlauches einzufügen. Zur axialen Fixierung des Gummieinsatzes ist dieser mit einem mittig umlaufend angeformten Steg versehen, der in eine mittig in der Durchführung der Schelle eingebrachte Nut eingreift.

In der EP 2 839 195 B1 ist eine Kabelklemme zur Befestigung an einer Sammelschiene offenbart, die aus zwei miteinander verbindbaren blockförmigen Schellenteilen zusammengesetzt ist. Die Schellenteile weisen jeweils eine Mulde auf, welche Mulden im montierten Zustand eine Durchführung ausbilden, wobei die beiden Schellenteile beidseitig der Durchführung Anschlagflächen aufweisen, die im montierten Zustand aneinander anliegen und durch die jeweils eine Stufenbohrung geführt ist. Im montierten Zustand ist jeweils in zwei zueinander fluchtende Stufenbohrungen eine Gewindehülse eingesetzt, in die beidseitig jeweils eine durch das jeweilige Befestigungsteil durch eine Stufenbohrung eine Schraube eingeschraubt ist. Nachteilig an dieser vorbekannten Vorrichtung ist, dass diese aufwändig zu montieren ist.

Hier will die Erfindung Abhilfe schaffen. Der Erfindung liegt die Aufgabe zu Grunde, eine Vorrichtung zur Befestigung von Kabeln, Rohren oder Schläuchen bereitzustellen, deren Montage vereinfacht ist. Gemäß der Erfindung wird diese Aufgabe durch eine Vorrichtung mit den Merkmalen des kennzeichnenden Teils des Patentanspruchs 1 gelöst.

Mit der Erfindung ist eine Vorrichtung zur Befestigung von Kabeln, Rohren oder Schläuchen bereitgestellt, die eine einfache Montage ermöglicht. Dadurch, dass wenigstens eine Anschlagfläche eines ersten Schellenteils ein erstes Rastelement aufweist und wenigstens eine Anschlagfläche des anderen Schellenteils ein zweites Rastelement aufweist, das im montierten Zustand mit einem ersten Rastelement des ersten Schellenteils verrastet ist, ist eine werkzeuglose Fixierung der beiden Schellenteile ermöglicht, wodurch die Montage vereinfacht ist.

In Weiterbildung der Erfindung ist erste Rastelement ein bevorzugt hohlzylindrisch ausgebildeter Raststift, der wenigstens eine seitliche Rastrippe aufweist und das zweite Rastelement ist eine Rastbohrung, die wenigstens eine radial nach innen ragende Rastnase aufweist. Hierdurch ist eine durch die Rastbohrung geführte Zusammenführung der beiden Schellenteile erzielt.

In Ausgestaltung der Erfindung ist der Raststift mit einer Vielzahl axial, vorzugsweise regelmäßig beabstandet zueinander angeordneter, sich radial nach außen erstreckenden Rastrippen versehen. Hierdurch ist eine stufenweise Verrastung im Zuge der Einführung des Raststiftes in die Rastbohrung erzielt. Dabei sind die Rastrippen bevorzugt in Richtung des freien Endes des Raststiftes geneigt an diesen angestellt, wodurch ein Einschub in Druckrichtung ermöglicht, in Zugrichtung hingegen blockiert ist.

In weiterer Ausgestaltung der Erfindung ist wenigstens eine Rastnase der wenigstens einen Rastnase zumindest bereichsweise umlaufend in der Bohrung angeordnet. Hierdurch ist eine stabile Rastverbindung erzielt.

In Weiterbildung der Erfindung ist jeweils eine Anschlagfläche der beiden Schellenteile mit einem ersten Rastelement und die andere Anschlagfläche mit einem zweiten Rastelement versehen. Hierdurch ist eine direkte rastende Fixierung der aneinander liegenden Anschlagflächen der beiden Schellenteile bei der Montage erzielt.

In Ausgestaltung der Erfindung sind die beiden Anschlagflächen der beiden Schellenteile jeweils mit einem ersten Rastelement und beabstandet zu diesem mit einem zweiten Rastelement versehen. Hierdurch ist eine doppelte Rastverbindung an beiden Anschlagflächen der Schellenteile erzielt, wodurch die Stabilität der Rastverbindung der Schellenteile erhöht ist. Zudem ist eine zur Mittelachse der Durchführung geneigte Befestigung eines ersten Schellenteils an dem anderen Schellenteil ermöglicht, wodurch eine vollflächige Anlage der Schellenteile an einem von diesem aufgenommenen Kabel, Rohr oder Schlauch erzielt ist.

In weiterer Ausgestaltung der Erfindung ist jeweils ein erstes Rastelement einer ersten Anschlagfläche jeweils eines Schellenteils gegenüberliegend eines zweiten Rastelements der anderen Anschlagfläche angeordnet. Hierdurch weist jede Anschlagfläche ein erstes Rastelement und beabstandet zu diesem ein zweites Rastelement auf, die Rastelemente der beiden gegenüberliegenden Anschlagflächen eines jeden Schellenteils vertauscht zueinander sind. Auf diese Weise ist eine Befestigung eines ersten Schellenteils an dem anderen Schellenteil in beiden Drehpositionen ermöglicht, wodurch die Montage weiter vereinfacht ist.

In Weiterbildung der Erfindung weisen die beiden Schellenteile jeweils wenigstens eine Bohrung zur Durchführung einer Gewindestange auf, welche Bohrungen im montierten Zustand der Vorrichtung zueinander fluchten. Hierdurch ist eine Schraubverbindung der beiden verrasteten Schellenteile über eine Gewindestange ermöglicht, wodurch eine gesicherte Verbindung der beiden Schellenteile erzielt ist. Über die wenigstens eine Gewindestange ist eine Befestigung der Vorrichtung an einer Schiene oder einer Wand ermöglicht.

Der Ausdruck "Bohrung" ist hier im Sinne einer Durchführung für eine Gewindestange zu verstehen, deren Querschnitt nicht zwingend kreisrund und deren Querschnittsabmessung in Längsrichtung nicht konstant sein muss. Vorzugsweise ist die Bohrung gleichwohl im Wesentlichen zylindrisch ausgebildet.

In Ausgestaltung der Erfindung ist wenigstens eine der wenigstens einen Bohrung der beiden Schellenteile beabstandet zu wenigstens einem Rastelement durch eine Anschlagfläche geführt, wobei bevorzugt durch beide Anschlagflächen der beiden Schellenteile jeweils ein Bohrung geführt ist. Hierdurch ist eine beidseitige Schraubverbindung der beiden Schellenteile nahe der Rastverbindung miteinander sowie eine lagefeste Befestigung der Vorrichtung an einer Schiene oder einer Wand ermöglicht.

In weiterer Ausgestaltung der Erfindung sind die Schellenteile jeweils in Form eines mit einer Einwölbung versehenen Quaders ausgebildet, wobei die Einwölbungen der beiden Befestigungsteile im montierten Zustand die Durchführung ausbilden. Hierdurch sind breite Anlageflächen für ein aufgenommenes Kabel (bzw. Rohr oder Schlauch) erzielt, wodurch eine gleichmäßige Einwirkung der Klemmkräfte bewirkt ist.

In Weiterbildung der Erfindung ist in die Durchführung ein ringförmiger Einsatz eingesetzt, der aus zwei Einsatzteilen gebildet ist, die jeweils in eine der beiden Schellenteile eingelegt ist. Bevorzugt sind die Einsatzteile aus einem thermoplastischen Elastomer hergestellt. Hierdurch ist eine vibrationsdämpfende Befestigung eines aufgenommenen Kabels, Rohrs oder Schlauchs erzielt.

In Ausgestaltung der Erfindung weisen die beiden Einsatzteile an ihrer dem jeweiligen Schellenteil zugewandten Seite wenigstens einen, bevorzugt wenigstens zwei parallel zueinander angeordnete Stege auf, die jeweils in eine hierzu in dem jeweiligen Schellenteil angeordnete Nut eingreift. Hierdurch ist eine lagerichtige Positionierung sowie axiale Fixierung der Einsatzteile in den Schellenteilen erzielt.

In weiterer Ausgestaltung der Erfindung sind die beiden Schellenteile zumindest an ihren zueinander zugewandten Seiten, bevorzugt insgesamt identisch ausgebildet. Hierdurch ist der Fertigungsaufwand vermindert. Bei identischer Ausgestaltung der Schellenteile sind zudem Lageraufwände minimiert.

In Weiterbildung der Erfindung sind die Schellenteile im Wesentlichen aus Kunststoff ausgebildet. Hierdurch ist eine kostengünstige Fertigung langlebiger und korrosionsresistenter Schellenteile ermöglicht. Bevorzugt sind die Schellenteile aus einem elastischen Kunststoff, vorzugsweise aus thermoplastischem Elastomer (TPE) oder einem ähnlich elastischen Material hergestellt. Bei Anordnung von die Durchführung ausbildenden Einsatzteilen aus elastischem Material können die Schellenteile auch aus Metall, insbesondere Aluminium, Stahl oder Edelstahl hergestellt sein.

Andere Weiterbildungen und Ausgestaltungen der Erfindung sind in den übrigen Unteransprüchen angegeben. Ausführungsbeispiele sind in den Zeichnungen dargestellt und werden nachfolgend im Einzelnen beschrieben. Es zeigen:

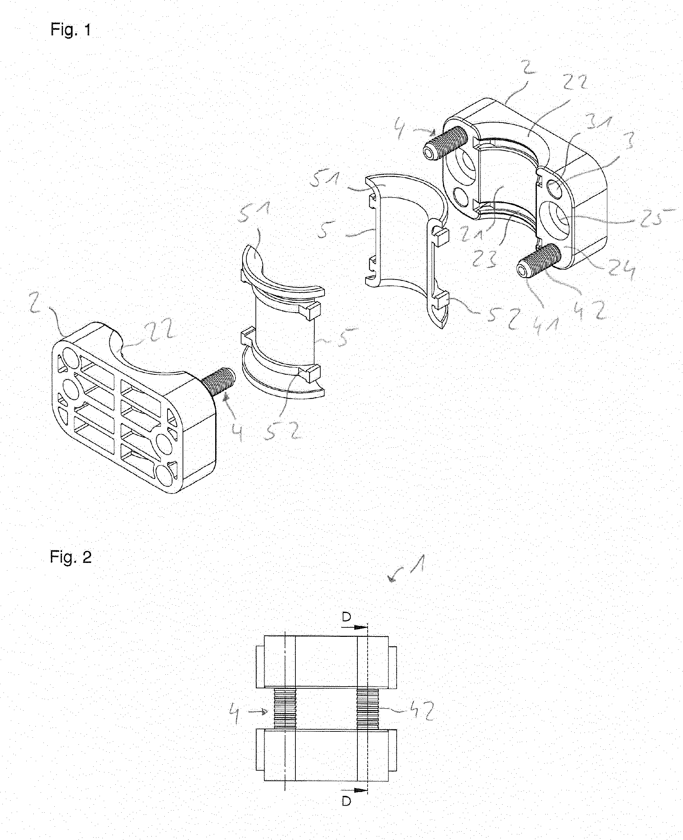

- Figur 1: die schematische räumliche Darstellung einer Vorrichtung zur Befestigung von Kabeln, Rohren oder Schläuchen in Explosionsdarstellung
- Figur 2: die schematische Darstellung der Vorrichtung aus Figur 1 in montiertem Zustand in einer Seitenansicht;

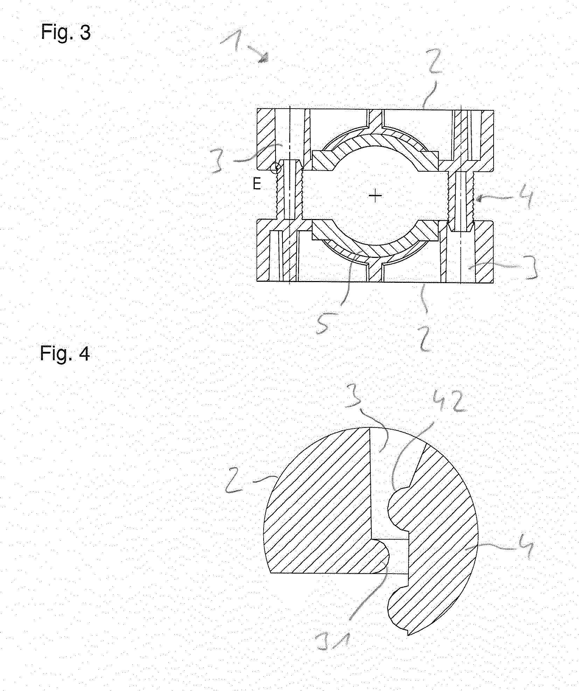

- Figur 3: die Darstellung der Vorrichtung aus Figur 2 im Längsschnitt D-D;
- Figur 4: die Detaildarstellung des Ausschnitts E der Vorrichtung aus Figur 3.

Die als Ausführungsbeispiel gewählte Befestigungsvorrichtung ist als blockförmige Kabelschelle 1 ausgebildet, die aus zwei identisch gestalteten Schellenteilen 2 zusammengesetzt ist.

Die Schellenteile 2 sind im Ausführungsbeispiel aus Polypropylen (PP) hergestellt und weisen einen im Wesentlichen quaderförmig ausgebildeten Grundkörper auf, in den mittig in Querrichtung eine halbzylinderförmige Einwölbung 21 angeordnet ist. Die Übergänge 22 der Einwölbungen 21 zu den an diese angrenzenden Stirnflächen des jeweiligen Schellenteils 2 sind jeweils abgerundet ausgebildet, wodurch eine glatte, kantenfreie Oberfläche gebildet ist.

Angrenzend an die Übergänge 22 sind in die Einwölbung 21 des Schellenteils 2 gegenüberliegend beabstandet zueinander zwei quer zur Längsmittelachse der Einwölbung 21 verlaufende Nuten 23 eingebracht.

Beidseitig der Einwölbung 21 ist jeweils eine Anschlagfläche 24 ausgebildet, durch die mittig eine Bohrung 25 geführt ist. Beabstandet zu der Bohrung 25 ist in die Anschlagfläche 24 auf einer Seite eine Rastbohrung 3 eingebracht, die im Ausführungsbeispiel als Sackbohrung ausgebildet ist. In einem geringen Abstand zur Anschlagfläche 24 ist an die Innenwandung der Rastbohrung 3 eine umlaufende, kragenartige Rastnase 31 angeformt.

Auf ihrer der Rastbohrung 3 gegenüberliegenden Seite der Bohrung 25 ist auf der Anschlagfläche 24 orthogonal zu dieser ein Raststift 4 angeordnet, der im Ausführungsbeispiel hohlzylindrisch ausgebildet ist. Der Raststift 4 weist an seinem freien Ende einen kegelabschnittsförmigen Einführabschnitt 41 auf, Die sich an den Einführabschnitt 1 anschließende Außenmantelfläche des Raststifts 4 ist mit einer Rippenstruktur versehen, die aus gleichmäßig beabstandet zueinander angeordneten, sich radial nach außen erstreckenden Rastrippen 42 gebildet ist, die in Richtung des Einführabschnitts 41 geneigt an die Außenmantelfläche des Raststifts 4 angestellt sind. Alternativ können die Rastrippen 42 auch orthogonal zur Mantelfläche des Raststiftes 4 angestellt sein.

Die Rastbohrung 3 und der Raststift 4 sind an den beiden gegenüberliegenden Anschlagflächen 24 "vertauscht zueinander" angeordnet, dass heißt, der Raststift 4 einer ersten Anschlagfläche 24 ist jeweils gegenüberliegend der Rastbohrung 3 der zweiten, gegenüberliegenden Anschlagfläche 24 und diagonal zum Raststift 4 dieser zweiten Anschlagfläche 24 angeordnet.

In die Einwölbung 21 jeder der beiden Schellenteile 2 ist ein Einsatzteil 5 eingesetzt, wobei die beiden Einsatzteile 5 der beiden Schellenteile 2 sich zu einem ringförmigen bzw. hohlzylindrischen Einsatz ergänzen. Das Einsatzteil 5 ist im Ausführungsbeispiel aus einem thermoplastischen Elastomer hergestellt und weist an seinen beiden Enden einen nach außen geformten Kragen 51 auf. Benachbart zu den beiden Kragen 51 ist auf der Außenmantelfläche des Einsatzteils 5 jeweils ein quer zur Mittelachse des Einsatzteils 5 sich erstreckender Steg 52 angeordnet. Das Einsatzteil 5 ist mit den beiden Stegen 52 in die beiden Nuten 23 des jeweiligen Schellenteils 2 eingesetzt, wobei der Kragen 51 an dem Übergang 22 des Schellenteils 2 anliegt.

Im Zuge der Montage der Kabelschelle 1 wird ein - nicht dargestelltes - Kabel in die mit einem Einsatzteil 5 versehene Einwölbung 21 eines ersten Schellenteils 2 eingelegt. Nachfolgend wird ein zweites Schellenteil 2 mit seinen Raststiften 4 in die Rastbohrungen 3 des ersten Schellenteils 2 eingeschoben, wobei die Raststifte 4 des ersten Schellenteils 2 in die Rastbohrungen 3 des zweiten Schellenteils hinbewegt werden. Die Rastrippen 42 der Raststifte 4 gleiten hierbei entlang der Rastnase 31 der jeweiligen Rastbohrung 3, wodurch eine Rastverbindung erzielt wird. Das zweite Schellenteil 2 wird soweit in Richtung des ersten Schellenteils 2 bewegt, bis das - nicht dargestellte - Kabel zwischen den Schellenteilen 2 eingespannt ist. Durch die Verrastung der Raststifte 4 mit den Rastbohrungen 3 sind die beiden Schellenteile 2 in dieser Position fixiert. Wird ein maximaler Außendurchmesser des eingespannten - nicht dargestellten - Kabels nicht überschritten, liegen die Anschlagflächen 24 der beiden Schellenteile 2 aneinander an.

## Patentansprüche

1. Vorrichtung zur Befestigung von Kabeln, Rohren oder Schläuchen, umfassend zwei miteinander verbindbare Schellenteile (2), welche im montierten Zustand eine Durchführung mit einem elliptischen, insbesondere kreisförmigen Querschnitt bilden, wobei die beiden Schellenteile (2) beidseitig der Durchführung Anschlagflächen (24) aufweisen, die im montierten Zustand aneinander anliegen, **dadurch gekennzeichnet, dass** wenigstens eine Anschlagfläche (24) eines ersten Schellenteils (2) ein erstes Rastelement aufweist und wenigstens eine Anschlagfläche (24) des anderen Schellenteils (2) ein zweites Rastelement aufweist, das im montierten Zustand mit einem ersten Rastelement des ersten Schellenteils (2) verrastet ist.

2. Vorrichtung nach Anspruch 1, **dadurch gekennzeichnet, dass** das erste Rastelement ein bevorzugt hohlzylindrisch ausgebildeter Raststift (4) ist, der wenigstens eine seitliche Rastrippe (42) aufweist und das zweite Rastelement eine Rastbohrung (3) ist, die wenigstens eine radial nach innen ragende Rastnase (31) aufweist.

3. Vorrichtung nach Anspruch 2, **dadurch gekennzeichnet, dass** der Raststift (4) mit einer Vielzahl axial, vorzugsweise regelmäßig beabstandet zueinander angeordneter, sich radial nach außen erstreckenden Rastrippen (42) versehen ist, die bevorzugt in Richtung des freien Endes des Raststiftes (4) geneigt an diesen angestellt sind.

4. Vorrichtung nach Anspruch 2 oder 3, **dadurch gekennzeichnet, dass** wenigstens eine Rastnase (31) der wenigstens einen Rastnase (31) zumindest bereichsweise umlaufend in der Bohrung (3) angeordnet ist.

5. Vorrichtung nach einem der vorgenannten Ansprüche, **dadurch gekennzeichnet, dass** jeweils eine Anschlagfläche (24) der beiden Schellenteile (2) mit einem ersten Rastelement und die andere Anschlagfläche (24) mit einem zweiten Rastelement versehen ist.

6. Vorrichtung nach Anspruch 5, **dadurch gekennzeichnet, dass** die beiden Anschlagflächen (24) der beiden Schellenteile (2) jeweils mit einem ersten Rastelement und beabstandet zu diesem mit einem zweiten Rastelement versehen sind.

7. Vorrichtung nach Anspruch 6, **dadurch gekennzeichnet, dass** jeweils ein erstes Rastelement einer ersten Anschlagfläche (24) jeweils eines Schellenteils (2) gegenüberliegend eines zweiten Rastelements der anderen Anschlagfläche (24) angeordnet ist.

8. Vorrichtung nach einem der vorgenannten Ansprüche, **dadurch gekennzeichnet, dass** die beiden Schellenteile (2) jeweils wenigstens eine Bohrung (25) zur Durchführung einer Gewindestange aufweisen, welche Bohrungen (25) im montierten Zustand der Schellenteile (2) zueinander fluchten.

9. Vorrichtung nach Anspruch 8, **dadurch gekennzeichnet, dass** wenigstens eine der wenigstens einen Bohrung (25) der beiden Schellenteile (2) beabstandet zu wenigstens einem Rastelement durch eine Anschlagfläche (24) geführt ist, wobei bevorzugt durch beide Anschlagflächen (24) der beiden Schellenteile (2) jeweils ein Bohrung (25) geführt ist.

10. Vorrichtung nach einem der vorgenannten Ansprüche, **dadurch gekennzeichnet, dass** die Schellenteile (2) jeweils in Form eines mit einer Einwölbung (21) versehenen Quaders ausgebildet sind, wobei die Einwölbungen (21) der beiden Schellenteile (2) im montierten Zustand die Durchführung ausbilden.

11. Vorrichtung nach einem der vorgenannten Ansprüche, **dadurch gekennzeichnet, dass** in die Durchführung ein ringförmiger Einsatz eingesetzt ist, der aus zwei Einsatzteilen (5) gebildet ist, die jeweils in eine der beiden Schellenteile (2) eingelegt ist.

12. Vorrichtung nach Anspruch 11, **dadurch gekennzeichnet, dass** die beiden Einsatzteile (5) an ihrer dem jeweiligen Schellenteil (2) zugewandten Seite wenigstens einen, bevorzugt wenigstens zwei parallel zueinander angeordnete Stege (52) aufweisen, die jeweils in eine hierzu in dem jeweiligen Schellenteil (2) angeordnete Nut (23) eingreift.

13. Vorrichtung nach Anspruch 11 oder 12, **dadurch gekennzeichnet, dass** der Einsatz aus einem thermoplastischen Elastomer hergestellt ist und/oder dass die Schellenteile (2) im Wesentlichen aus Kunststoff hergestellt sind.

14. Vorrichtung nach einem der vorgenannten Ansprüche, **dadurch gekennzeichnet, dass** die beiden Schellenteile (2) zumindest an ihren zueinander zugewandten Seiten, bevorzugt insgesamt identisch ausgebildet sind.

## Geänderte Patentansprüche

### Geänderte Patentansprüche gemäss Regel 137(2) EPÜ.

1. Vorrichtung zur Befestigung von Kabeln, Rohren oder Schläuchen, umfassend zwei miteinander verbindbare Schellenteile (2), welche im montierten Zustand eine Durchführung mit einem elliptischen, insbesondere kreisförmigen Querschnitt bilden, wobei die beiden Schellenteile (2) beidseitig der Durchführung Anschlagflächen (24) aufweisen, die im montierten Zustand aneinander anliegen, wobei wenigstens eine Anschlagfläche (24) eines ersten Schellenteils (2) ein erstes Rastelement aufweist und wenigstens eine Anschlagfläche (24) des anderen Schellenteils (2) ein zweites Rastelement aufweist, das im montierten Zustand mit einem ersten Rastelement des ersten Schellenteils (2) verrastet ist, **dadurch gekennzeichnet, dass** das erste Rastelement ein Raststift (4) ist, der wenigstens eine seitliche Rastrippe (42) aufweist und das zweite Rastelement eine Rastbohrung (3) ist, die wenigstens eine radial nach innen ragende Rastnase (31) aufweist, die zumindest bereichsweise umlaufend in der Bohrung (3) angeordnet ist, wobei jeweils eine Anschlagfläche (24) der beiden Schellenteile (2) mit einem ersten Rastelement und die andere Anschlagfläche (24) mit einem zweiten Rastelement versehen ist, wobei die beiden Anschlagflächen (24) der beiden Schellenteile (2) jeweils mit einem ersten Rastelement und beabstandet zu diesem mit einem zweiten Rastelement versehen sind und wobei jeweils ein erstes Rastelement einer ersten Anschlagfläche (24) jeweils eines Schellenteils (2) gegenüberliegend eines zweiten Rastelements der anderen Anschlagfläche (24) angeordnet ist.

2. Vorrichtung nach Anspruch 1, **dadurch gekennzeichnet, dass** der Raststift (4) hohlzylindrisch ausgebildet ist:

3. Vorrichtung nach Anspruch1 oder 2, **dadurch gekennzeichnet, dass** der Raststift (4) mit einer Vielzahl axial, vorzugsweise regelmäßig beabstandet zueinander angeordneter, sich radial nach außen erstreckenden Rastrippen (42) versehen ist, die bevorzugt in Richtung des freien Endes des Raststiftes (4) geneigt an diesen angestellt sind.

4. Vorrichtung nach einem der vorgenannten Ansprüche, **dadurch gekennzeichnet, dass** die beiden Schellenteile (2) jeweils wenigstens eine Bohrung (25) zur Durchführung einer Gewindestange aufweisen, welche Bohrungen (25) im montierten Zustand der Schellenteile (2) zueinander fluchten.

5. Vorrichtung nach Anspruch 4, **dadurch gekennzeichnet, dass** wenigstens eine der wenigstens einen Bohrung (25) der beiden Schellenteile (2) beabstandet zu wenigstens einem Rastelement durch eine Anschlagfläche (24) geführt ist, wobei bevorzugt durch beide Anschlagflächen (24) der beiden Schellenteile (2) jeweils ein Bohrung (25) geführt ist.

6. Vorrichtung nach einem der vorgenannten Ansprüche, **dadurch gekennzeichnet, dass** die Schellenteile (2) jeweils in Form eines mit einer Einwölbung (21) versehenen Quaders ausgebildet sind, wobei die Einwölbungen (21) der beiden Schellenteile (2) im montierten Zustand die Durchführung ausbilden.

7. Vorrichtung nach einem der vorgenannten Ansprüche, **dadurch gekennzeichnet, dass** in die Durchführung ein ringförmiger Einsatz eingesetzt ist, der aus zwei Einsatzteilen (5) gebildet ist, die jeweils in eine der beiden Schellenteile (2) eingelegt ist.

8. Vorrichtung nach Anspruch 7, **dadurch gekennzeichnet, dass** die beiden Einsatzteile (5) an ihrer dem jeweiligen Schellenteil (2) zugewandten Seite wenigstens einen, bevorzugt wenigstens zwei parallel zueinander angeordnete Stege (52) aufweisen, die jeweils in eine hierzu in dem jeweiligen Schellenteil (2) angeordnete Nut (23) eingreift.

9. Vorrichtung nach Anspruch 7 oder 8, **dadurch gekennzeichnet, dass** der Einsatz aus einem thermoplastischen Elastomer hergestellt ist und/oder dass die Schellenteile (2) im Wesentlichen aus Kunststoff hergestellt sind.

10. Vorrichtung nach einem der vorgenannten Ansprüche, **dadurch gekennzeichnet, dass** die beiden Schellenteile (2) zumindest an ihren zueinander zugewandten Seiten, bevorzugt insgesamt identisch ausgebildet sind.
